# EUROPEAN PATENT APPLICATION

(11) **EP 4 625 921 A1**
(43) Date of publication of application: **01.10.2025**
(21) Application number: 23915245.7
(22) Date of filing: 09.01.2023
(51) Int. Cl.: H04L 41/0803

(54) **COMMUNICATION METHOD, APPARATUS, AND SYSTEM**

(71) Applicant: Huawei Technologies Co., Ltd., Shenzhen, Guangdong 518129 (CN)
(72) Inventor: DENG, Xiang, Shenzhen, Guangdong 518129 (CN); WU, Xiaochuan, Shenzhen, Guangdong 518129 (CN); MA, Ning, Shenzhen, Guangdong 518129 (CN)
(74) Representative: Maiwald GmbH
(86) International application number: PCT/CN2023/071281
(87) International publication number: WO 2024/148461

(57) **Abstract**

Embodiments of this application provide a communication method, apparatus, and system. The method includes: obtaining an identifier of a second apparatus and an identifier of an optical module, where the second apparatus uses the optical module; and configuring second configuration information of the second apparatus based on the identifier of the optical module, where the second configuration information is the same as first configuration information of a first apparatus, and both the first apparatus and the second apparatus use the optical module. According to the foregoing method, when the first apparatus is replaced by the second apparatus, configuration information of the second apparatus may automatically take effect, thereby resolving a problem of low efficiency caused by manual configuration.

## Description

### TECHNICAL FIELD

This application relates to the communication field, and in particular, to a communication method, apparatus, and system.

### BACKGROUND

In a wireless communication field, an access network device is used as an example. Some apparatuses in the access network device can work normally only after corresponding configuration information is configured. When one of the apparatuses is replaced with a new apparatus, configuration information of the new apparatus needs to be manually configured. For example, the access network device includes a first radio frequency unit. When the first radio frequency unit cannot work normally and is replaced with a second radio frequency unit, operation and maintenance personnel need to manually find configuration information of the first radio frequency unit, and configure the second radio frequency unit with the configuration information of the first radio frequency unit. The configuration information of the first radio frequency unit is used as configuration information of the second radio frequency unit. However, manual configuration takes some time, and an error may occur in a manual configuration process. Consequently, efficiency of making the second radio frequency unit go online to replace the first radio frequency unit is low.

### SUMMARY

This application provides a communication method, to improve efficiency of configuring configuration information of a communication apparatus. To achieve the foregoing objectives, the following technical solutions are used in embodiments of this application.

According to a first aspect, an embodiment of this application provides a method. The method may be performed by a distributed unit or a radio frequency unit. The method includes: obtaining an identifier of a second apparatus and an identifier of an optical module, where the second apparatus uses the optical module; and configuring second configuration information of the second apparatus based on the identifier of the optical module, where the second configuration information is the same as first configuration information of a first apparatus, and both the first apparatus and the second apparatus use the optical module.

According to the foregoing solution, the second apparatus may automatically obtain the second configuration information based on the identifier of the optical module, thereby improving efficiency of configuring configuration information of the second apparatus. In addition, a probability of occurrence of a case such as an error caused by manual configuration may be further reduced.

It may be understood that, if the method is performed by the radio frequency unit and the second apparatus is the radio frequency unit, in the method, the second apparatus may know its identifier (namely, the identifier of the second apparatus) and the identifier of the optical module used by the second apparatus. If the method is performed by the distributed unit and the second apparatus is the radio frequency unit, the distributed unit may receive the identifier of the second apparatus and the identifier of the optical module from the second apparatus.

In this application, the distributed unit may be described by using a baseband unit as an example. The foregoing descriptions may be applicable to descriptions in other aspects, and details are not described again.

It may be understood that, that the second apparatus uses the optical module may also be understood as that the optical module is inserted into the second apparatus, the optical module is disposed in the second apparatus, or the like. This is not limited in this application.

In a possible implementation, the method further includes: establishing a second association relationship, where the second association relationship is a correspondence among the identifier of the second apparatus, the identifier of the optical module, and the second configuration information.

In a possible implementation, the method further includes: sending the second association relationship to a network management device. For example, the network management device stores the second association relationship after receiving the second association relationship.

In a possible implementation, configuring the second configuration information of the second apparatus based on the identifier of the optical module includes: determining a first association relationship based on the identifier of the optical module, where the first association relationship is a correspondence among an identifier of the first apparatus, the identifier of the optical module, and the first configuration information; using the first configuration information as the second configuration information; and configuring the second configuration information. In other words, because both the second apparatus and the first apparatus use the same optical module, configuration information of the first apparatus, namely, the first configuration information, is first found through the optical module, and then the first configuration information is used as configuration information of the second apparatus, namely, the second configuration information, and is configured for the second apparatus. In this way, automatic configuring of the second configuration information is finally implemented.

In a possible implementation, the method further includes: receiving the first association relationship from the network management device. For example, the first association relationship includes the identifier of the optical module used by the first apparatus and the first configuration information of the first apparatus, and the network management device stores the first association relationship. Therefore, the first configuration information can be found based on the identifier of the optical module only after the first association relationship is received from the network management device.

It should be understood that, if the first association relationship is stored in an execution body of the method, for example, the distributed unit or the radio frequency unit, an action of receiving the first association relationship from the network management device may not be performed, and a first association relationship stored locally may be directly used to implement the foregoing function.

In a possible implementation, the first configuration information or the second configuration information includes at least one of the following: standard information, sector information, address information, and information about a virtual local area network.

In a possible implementation, an execution scenario of the method is as follows: When the first apparatus is faulty, the second apparatus is configured to replace the first apparatus.

When the second apparatus is a radio frequency unit for which operation and maintenance are not independently performed, the method is executed by the distributed unit, and the method may further include a subsequent implementation or any possible case.

In a possible implementation, obtaining the identifier of the second apparatus and the identifier of the optical module includes: receiving the identifier of the second apparatus and the identifier of the optical module, for example, receiving the identifier of the second apparatus and the identifier of the optical module from the second apparatus.

In a possible implementation, receiving the identifier of the second apparatus and the identifier of the optical module includes: receiving second information, where the second information includes the identifier of the second apparatus and the identifier of the optical module.

In a possible case, the second information may further include a type of the second apparatus, and the type of the second apparatus is radio frequency module, remote radio unit, radio unit, remote radio head, radio frequency processing unit, or active antenna processing unit.

In a possible case, the second information is in an ethernet frame or a high-level data link control frame.

In a possible case, receiving the second information includes: receiving the second information through a fronthaul interface, a common public radio interface, or an enhanced common public radio interface.

In a possible implementation, the method further includes: receiving the identifier of the first apparatus and the identifier of the optical module; and establishing the first association relationship. That is, before performing the method in the first aspect, the distributed unit first establishes the first association relationship based on the received identifier of the first apparatus and the received identifier of the optical module. Specifically, the identifier of the first apparatus and the identifier of the optical module are received from the first apparatus, and the first association relationship is established.

In a possible implementation, receiving the identifier of the first apparatus and the identifier of the optical module includes: receiving first information, where the first information includes the identifier of the first apparatus and the identifier of the optical module.

In a possible case, the first information may further include a type of the first apparatus, and the type of the first apparatus is radio frequency module, remote radio unit, radio unit, remote radio head, radio frequency processing unit, or active antenna processing unit.

In a possible case, the first information is in an ethernet frame or a high-level data link control frame.

In a possible case, receiving the first information includes: receiving the first information through a fronthaul interface, a common public radio interface, or an enhanced common public radio interface.

In a possible implementation of the foregoing implementations, the method further includes: sending the first association relationship to the network management device. For example, after establishing the first association relationship, the distributed unit sends the first association relationship to the network management device, to implement a function of recording or storing the first association by the network management device.

In a possible implementation, the method further includes: obtaining the identifier of the second apparatus and a first optical module identifier set, where the first optical module identifier set includes the identifier of the optical module and an identifier of a first optical module; and configuring a third association relationship, where the third association relationship is a relationship among the identifier of the second apparatus, the second configuration information, and the first optical module identifier set. It may be understood that the second apparatus may use more than one optical module. Therefore, the third association relationship may be established, so that an identifier set of at least one optical module used by the second apparatus is associated with the identifier of the second apparatus and the second configuration information.

In the foregoing implementations, in a possible case, the method further includes: obtaining the identifier of the second apparatus and a second optical module identifier set, where the second optical module identifier set includes the identifier of the optical module and an identifier of a second optical module; and configuring a fourth association relationship, where the fourth association relationship is a relationship among the identifier of the second apparatus, the second configuration information, and the second optical module identifier set. For example, when the first optical module is faulty, the first optical module is replaced with the second optical module. Therefore, the third association relationship needs to be updated to the fourth association relationship, to dynamically maintain correctness of an association relationship between the second apparatus and the at least one used optical module.

Specifically, for example, configuring the fourth association relationship includes: determining the third association relationship based on the identifier of the second apparatus and the identifier of the optical module in the second optical module identifier set; and replacing the first optical module identifier set in the third association relationship with the second optical module identifier set, to obtain and configure the fourth association relationship.

According to a second aspect, an embodiment of this application provides a communication method. The method may be performed by a radio frequency unit, and the radio frequency unit may be a radio frequency unit for which operation and maintenance are not independently performed. The method includes: sending an identifier of a first apparatus and an identifier of an optical module, where the first apparatus uses the optical module; and receiving first configuration information of the first apparatus.

For beneficial effects of this aspect, refer to the descriptions of the first aspect. Details are not described again.

In a possible implementation, sending the identifier of the first apparatus and the identifier of the optical module includes: sending first information, where the first information includes the identifier of the first apparatus and the identifier of the optical module.

In a possible case, the first information further includes a type of the first apparatus, and the type of the first apparatus is radio frequency module, remote radio unit, radio unit, remote radio head, radio frequency processing unit, or active antenna processing unit.

In a possible case, the first information is in an ethernet frame or a high-level data link control frame.

In a possible case, sending the first information includes: sending the first information through a fronthaul interface, a common public radio interface, or an enhanced common public radio interface.

In a possible implementation, the identifier of the first apparatus and the identifier of the optical module are used to establish a first association relationship, and the first association relationship is a relationship among the identifier of the first apparatus, the identifier of the optical module, and the first configuration information of the first apparatus.

For both the implementations and the possible cases, refer to the related descriptions in the first aspect. Details are not described again.

In a possible implementation, sending the identifier of the first apparatus and the identifier of the optical module includes: sending the identifier of the first apparatus and a first optical module identifier set, where the first optical module identifier set includes the identifier of the optical module and an identifier of a first optical module.

According to a third aspect, an embodiment of this application provides a communication method. The method may be performed by a network management device. The method may include: receiving a first association relationship, where the first association relationship is a relationship among an identifier of a first apparatus, an identifier of an optical module, and configuration information; and storing the first association relationship.

According to the foregoing solution, the network management device stores the first association relationship, and provides support for execution of the method in the first aspect.

In a possible implementation, the method further includes: receiving a second association relationship, where the second association relationship includes a relationship between an identifier of a second apparatus and the configuration information.

In a possible case, the second association relationship further includes the identifier of the optical module.

In a possible case, the second association relationship is stored.

In a possible implementation, the configuration information includes at least one of the following: standard information, sector information, address information, and information about a virtual local area network.

According to a fourth aspect, an embodiment of this application provides a communication apparatus, including a processor. The processor is configured to: read a program from a memory and run the program, to implement the method according to the first aspect or any possible implementation thereof (for example, when the communication apparatus is a distributed unit or a radio frequency unit), or to implement the method according to the second aspect or any possible implementation thereof (for example, when the communication apparatus is a radio frequency unit), or to implement the method according to the third aspect (for example, when the communication apparatus is a network management device).

According to a fifth aspect, an embodiment of this application provides a communication system, including a distributed unit and a radio frequency unit. The distributed unit may perform the method according to the first aspect or any possible implementation thereof.

In a possible case, the communication system further includes a network management device, and the network management device is configured to manage the distributed unit and a second apparatus. Specifically, the network management device may perform the method according to the third aspect or any possible implementation thereof.

In a possible case, the radio frequency unit is any one of the following: radio frequency module, remote radio unit, radio unit, remote radio head, radio frequency processing unit, or active antenna processing unit.

According to a sixth aspect, an embodiment of this application provides a computer program product including instructions. When the computer program product runs on a computer, the computer is enabled to perform the method according to the first aspect or any possible implementation thereof, or the method according to the second aspect or any possible implementation thereof, or the method according to the third aspect or any possible implementation thereof.

According to a seventh aspect, an embodiment of this application provides a computer-readable storage medium. The computer-readable storage medium stores instructions. When the instructions are run on a computer, a processor is enabled to perform the method according to the first aspect or any possible implementation thereof, or the method according to the second aspect or any possible implementation thereof, or the method according to the third aspect or any possible implementation thereof.

### BRIEF DESCRIPTION OF DRAWINGS

FIG. 1 is a diagram of a structure of a communication system to which this application is applicable;
FIG. 2 is a diagram of a scenario to which this application is applicable;
FIG. 3 is a schematic flowchart of a communication method according to this application;
FIG. 4 is a diagram of a possible frame structure to which this application is applicable;
FIG. 5 is a diagram of another possible frame structure to which this application is applicable;
FIG. 6 is a diagram of a first association relationship according to this application;
FIG. 7 is a diagram of a second association relationship according to this application;
FIG. 8 is a schematic flowchart of another communication method according to this application;
FIG. 9 is a schematic flowchart of still another communication method according to this application;
FIG. 10 is a schematic flowchart of still another communication method according to this application;
FIG. 11 is a diagram of a communication apparatus according to an embodiment of this application; and
FIG. 12 is a diagram of another communication apparatus according to an embodiment of this application.

### DESCRIPTION OF EMBODIMENTS

To make objectives, technical solutions, and advantages of embodiments of this application clearer, the following further describes embodiments of this application in detail with reference to the accompanying drawings. The technical solutions in embodiments of this application may be applied to various communication systems, for example, a long term evolution (long term evolution, LTE) network, an LTE frequency division duplex (frequency division duplex, FDD) network, an LTE time division duplex (time division duplex, TDD) network, a 5th generation (5th generation, 5G) mobile communication network or a new radio (new radio, NR) network, a non-terrestrial network (non-terrestrial network, NTN), a future communication network, or another similar communication network. In this application, the network may also be referred to as a system. Network architectures and service scenarios described in this application are intended to describe the technical solutions in this application more clearly, and do not constitute a limitation on the technical solutions provided in this application. A person of ordinary skill in the art may learn that, with evolution of network architectures and emergence of new service scenarios, the technical solutions provided in this application are also applicable to similar technical problems.

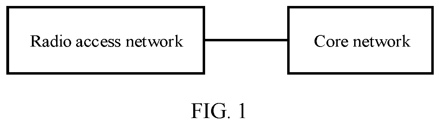

FIG. 1 is a diagram of a possible non-limiting system. As shown in FIG. 1, the communication system includes a radio access network (radio access network, RAN) and a core network (core network, CN). The RAN includes at least one RAN node and at least one user equipment. The RAN may also include other RAN nodes, for example, a wireless relay device and/or a wireless backhaul device (not shown in FIG. 1). The user equipment is connected to the RAN node in a wireless manner. The RAN node is connected to the core network in a wireless or wired manner. A core network device in the core network and the RAN node in the RAN may be different physical devices, or may be a same physical device that integrates a logical function of the core network and a logical function of the radio access network.

The RAN may be a cellular system related to a 3rd generation partnership project (3rd generation partnership project, 3GPP), for example, a 4G or 5G mobile communication system or a future-oriented evolved system (for example, a 6G mobile communication system). Alternatively, the RAN may be an open access network (open RAN, O-RAN or ORAN), a non-terrestrial network (non-terrestrial network, NTN) system, or a wireless fidelity (wireless fidelity, Wi-Fi) system. Alternatively, the RAN 100 may be a communication system that integrates the foregoing two or more systems.

The RAN node may also be sometimes referred to as an access network device, a RAN entity, an access node, or the like, and constitutes a part of the communication system, to help a terminal implement radio access. A plurality of RAN nodes in the communication system may be nodes of a same type, or may be nodes of different types. The RAN node and the user equipment are sometimes referred to as communication apparatuses.

In a possible scenario, the RAN node may be a base station (base station), a satellite base station, an evolved base station (evolved NodeB, eNodeB), a transmission reception point (transmission reception point, TRP), a next generation base station (next generation NodeB, gNB), a next generation base station in a 6th generation (6th generation, 6G) mobile communication system, a base station in a future mobile communication system, an access node in a Wi-Fi system, or the like. The RAN node may be a macro base station, a micro base station, an indoor base station, a relay node, or a donor node, or may be a radio controller in a cloud radio access network (cloud radio access network, CRAN) scenario. Optionally, the RAN node may alternatively be a server, a wearable device, a vehicle, a vehicle-mounted device, or the like. For example, the access network device in a vehicle to everything (vehicle to everything, V2X) technology may be a road side unit (road side unit, RSU).

In another possible scenario, a plurality of RAN nodes coordinate to assist the user equipment in implementing radio access, and different RAN nodes separately implement some functions of a base station. For example, the RAN node may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a radio remote unit (remote radio unit, RRU), a remote radio head (remote radio head, RRH), a radio frequency processing unit (radio frequency unit, RFU), or an active antenna processing unit (active antenna unit, AAU).

In different systems, the CU (or the CU-CP and the CU-UP), the DU, or the RU may also have different names, but a person skilled in the art may understand their meanings. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any unit in the CU (or the CU-CP or the CU-UP), the DU, and the RU in this application may be implemented by using a software module, a hardware module, or a combination of a software module and a hardware module.

In this application, an example in which the RAN node is referred to as an access network device is used for description, and an example in which the access network device includes a distributed unit and a radio unit is used for description. An example in which the distributed unit is a baseband unit and an example in which the radio unit is a radio frequency unit are used for description.

For example, the radio frequency unit and the baseband unit in the access network device communicate with each other through an optical fiber, and at least one optical module is configured in the radio frequency unit or the baseband unit to implement mutual conversion between an optical signal and an electrical signal. For example, when the radio frequency unit is a transmit end and the baseband unit is a receive end, an optical module in the radio frequency unit may convert an electrical signal of the radio frequency unit into an optical signal, and then the optical signal is transmitted to the baseband unit through an optical fiber; and after receiving the optical signal, an optical module in the baseband unit may convert the optical signal into an electrical signal, thereby completing communication between the radio frequency unit and the baseband unit. Any one optical module has one serial number, and the serial number is used to uniquely identify the optical module. In other words, serial numbers are in a one-to-one correspondence with optical modules. The serial number may be a vendor serial number (vendor serial number, VSN), and a length of the serial number may be 16 bits. This is not limited in this application. The radio frequency unit also has a serial number. For example, the serial number of the radio frequency unit may be represented by an electronic serial number (electronic serial number, ESN). Similarly, the electronic serial number also has a one-to-one correspondence with the radio frequency unit, and a specific radio frequency unit may be uniquely identified by using the electronic serial number.

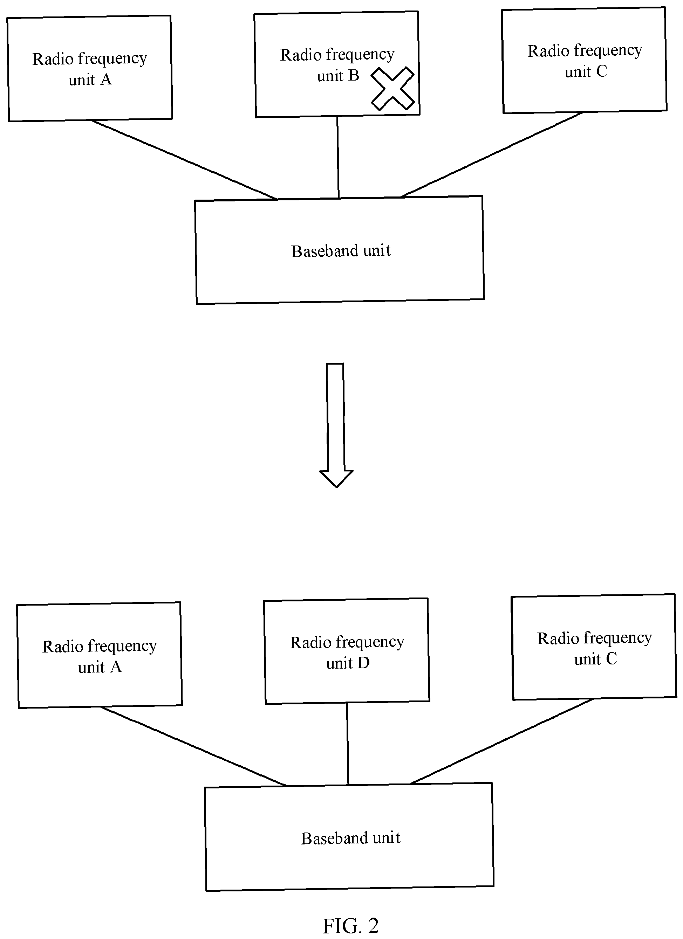

As shown in FIG. 2, a baseband unit is connected to three radio frequency units, which are respectively a radio frequency unit A, a radio frequency unit B, and a radio frequency unit C. The radio frequency units A to C each include at least one optical module, and the baseband unit also includes optical modules (not shown in FIG. 2) respectively corresponding to the optical modules in the radio frequency units A to C. In a running process of the access network device, there may be a case in which the radio frequency unit cannot work. When the radio frequency unit B is faulty and cannot work, after operation and maintenance personnel replace the radio frequency unit B with a new radio frequency unit D, a mapping relationship between a plurality of units (the baseband unit and the radio frequency unit D) and/or a plurality of modules (the optical modules in the baseband unit and an optical module of the radio frequency unit D) in the access network device needs to be manually reconfigured, so that the baseband unit in the access network device can identify the new radio frequency unit D, thereby restoring normal work. For example, the operation and maintenance personnel obtain information about the radio frequency unit D, manually identify the radio frequency unit D and information about the optical module used in the radio frequency unit D, manually configure a mapping relationship between the baseband unit and the corresponding radio frequency unit D as well as the optical module in the access network device, and may further configure information about a virtual local area network (virtual local area network, VLAN) and/or address information of the radio frequency unit D according to a requirement, for example, an internet protocol (internet protocol, IP) address and a call home (call home) address. A probability of occurrence of an error in the foregoing manual configuration process is high, and efficiency is low.

To resolve the foregoing problem, this application provides a communication method, to implement automatic configuring of an access network device.

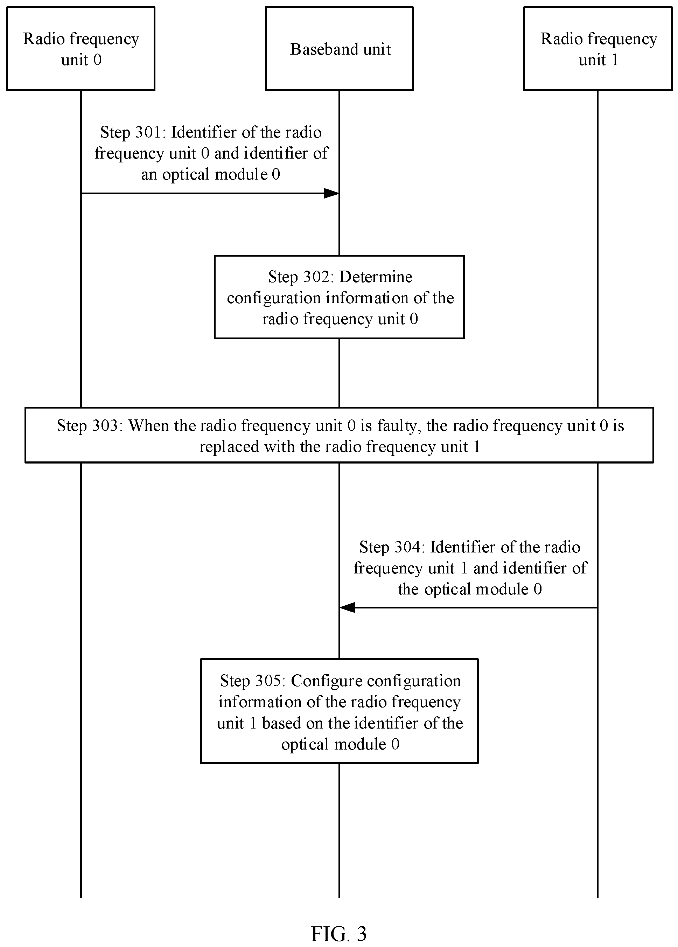

FIG. 3 shows a communication method according to this application. The method is applicable to any scenario in which a radio frequency unit is replaced. This embodiment may be applied to the scenarios in FIG. 1 and FIG. 2. Herein, one access network device is used as an example for description. The access network device includes a radio frequency unit 0.

For example, one or more optical modules used by the radio frequency unit 0 include an optical module 0. The radio frequency unit 0 has an identifier used to uniquely identify the radio frequency unit 0, and the identifier of the radio frequency unit 0 may be represented as ESN0. The optical module 0 has an identifier used to uniquely identify the optical module 0, and the identifier of the optical module 0 may be represented as SN0. It should be understood that the optical module may further include an optical module 1, or may further include another optical module.

The method may include the following steps.

Step 301: The radio frequency unit 0 sends the identifier of the radio frequency unit 0 and the identifier of the optical module 0 to a baseband unit.

It may be understood that, because the one or more optical modules used by the radio frequency unit 0 include the optical module 0, the radio frequency unit 0 may query the identifier of the optical module 0. In a specific implementation, three optical modules may be inserted into the radio frequency unit 0. For example, the three optical modules are the optical module 0, the optical module 1, and an optical module 2, and the radio frequency unit 0 may send the identifier of the optical module 0, an identifier of the optical module 1, and an identifier of the optical module 2. In this embodiment, the optical module 0 is used as an example for description. During specific implementation, the identifier of the optical module 0 mentioned subsequently in this embodiment may be replaced with identifiers of all optical modules used by the radio frequency unit 0. Details are not described subsequently.

In a possible implementation, the radio frequency unit 0 sends the identifier of the radio frequency unit 0 and a feature attribute to the baseband unit. The feature attribute includes the identifier of the optical module 0. This implementation may be applicable to descriptions of other related actions in this application, and details are not described again.

In a possible implementation, the radio frequency unit 0 sends first information to the baseband unit. The first information includes the identifier of the radio frequency unit 0 and the identifier of the optical module 0.

In a possible implementation, the radio frequency unit 0 sends the first information to the baseband unit through a fronthaul interface, a common public radio interface (common public radio interface, CPRI), or an enhanced common public radio interface (enhanced common public radio interface, eCPRI).

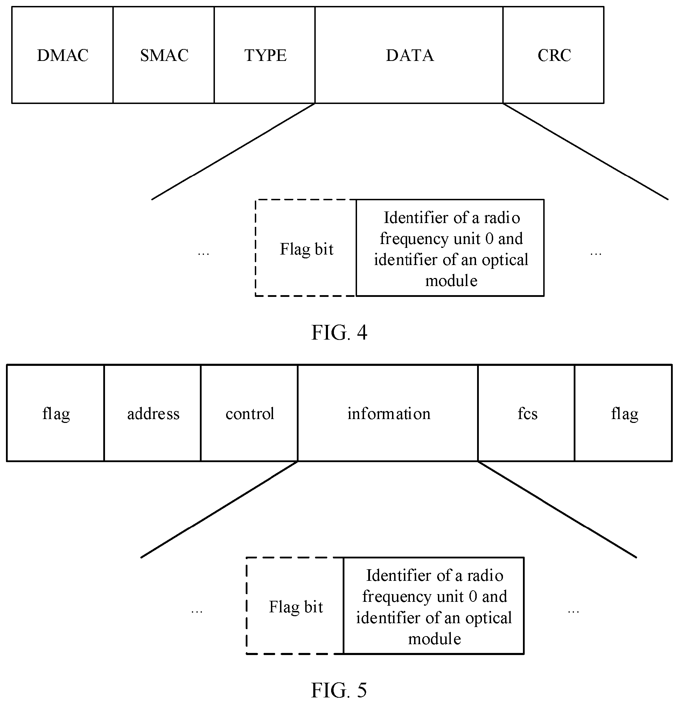

Specifically, in a possible case, a format of the first information may be a format of an ethernet (Ethernet, ETH) frame. In FIG. 4, a format of an Ethernet II frame is used as an example, and the first information is in the Ethernet II frame. The Ethernet II frame may include but is not limited to a destination media access control address (destination media access control, DMAC) field, a source media access control address (source media access control, SMAC) field, a type (TYPE) field, a data (DATA) field, and a cyclic redundancy code (cyclic redundancy code, CRC) field. Specifically, the first information is in the data field. As shown in FIG. 4, the data field includes the first information. Further, optionally, a flag bit may be placed in a field of a preceding part of the first information in the data field, and the flag bit may be used to locate a start location of the first information. In addition, the ethernet frame may alternatively be an Institute of Electrical and Electronics Engineers (Institute of Electrical and Electronics Engineers, IEEE) 802.3 frame, which is similar to the Ethernet II frame. The IEEE 802.3 frame also includes a data field, and the first information may also be in the data field. Further, optionally, a flag bit may be placed before a start location of the first information in the IEEE 802.3 frame, and is not shown in the figure.

In another possible case, a format of the first information is a format of a high-level data link control (High-Level Data Link Control, HDLC) frame. In FIG. 5, the format of the HDLC frame is used as an example, and the first information is in the HDLC frame. The HDLC frame may include but is not limited to a flag (flag) field, an address (address) field, a control (control) field, an information (information) field, a frame check sequence (Frame Check Sequence, FCS) field, and the like. The information field includes the first information. Similarly, a flag bit may also be placed before the first information, and is used to locate the first information.

In addition, regardless of which of the foregoing possible cases, the flag bit may be placed in a plurality of manners. For example, a flag bit may be placed before the identifier of the radio frequency unit 0, and a flag bit may also be placed before an identifier of the one or more optical modules used by the radio frequency unit 0. In addition, placing sequences of the identifier of the radio frequency unit 0 and an identifier of an optical module (for example, the identifier of the optical module 0) are not limited in this application.

In addition, optionally, in this step, the radio frequency unit 0 may further send device type information of the radio frequency unit 0 to the baseband unit. The device type information may be a device type of the radio frequency unit 0. The device type may be one of the following device types: an AAU, an RRU, an RRH, an RFU, an RU, and the like.

In other words, by using the foregoing possible implementation as an example, the radio frequency unit 0 sends the first information to the baseband unit, and the first information may include the identifier of the radio frequency unit 0, the device type information of the radio frequency unit 0, and the identifier of the optical module 0.

Step 302: The baseband unit determines configuration information of the radio frequency unit 0.

The configuration information of the radio frequency unit 0 may include, for example, at least one of the following:
standard information, sector information, address information, and information about a home virtual local area network.

For example, the standard information may be an LTE standard, an NR standard, or the like. That is, if the standard information is the LTE standard, the radio frequency unit 0 supports the LTE standard.

For example, the sector information may be a sector 1, a sector 2, or a sector 3. The sector in this application is physical sector information of the access network device. That is, if the sector information is the sector 1, the radio frequency unit 0 corresponds to the sector 1, or it may be understood that a communication function is provided for a user served by the sector 1.

For example, the address information may include at least one of an IP address and a call home address. That is, for example, if the address information includes the IP address, an IP address of the radio frequency unit 0 is the IP address in the address information.

For example, the information about the virtual local area network may include an identifier (identifier, ID) of the virtual local area network. For example, the identifier of the virtual local area network may be represented by a VLAN ID.

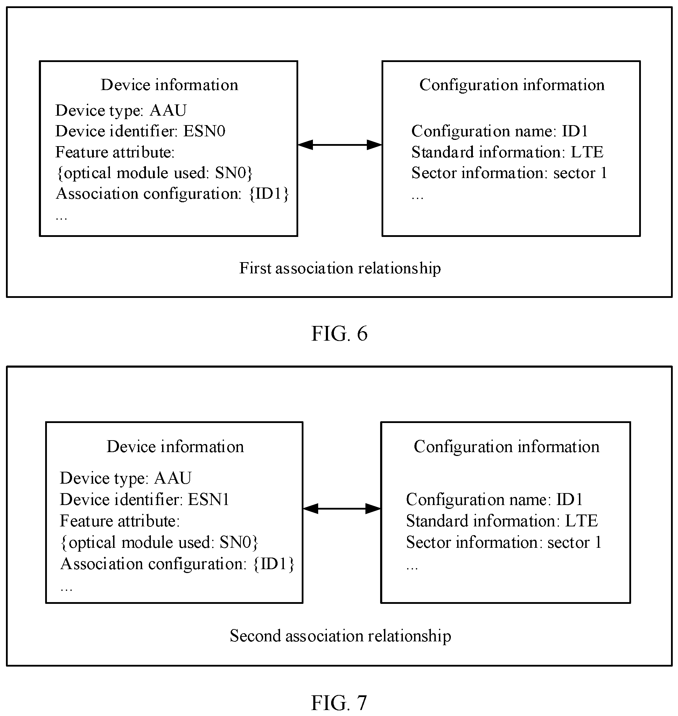

Further, the baseband unit may establish a first association relationship. The first association relationship is an association relationship between the configuration information of the radio frequency unit 0 and information such as the identifier of the radio frequency unit 0, the identifier of the optical module 0, and the device type information of the radio frequency unit 0. FIG. 6 shows a possible case. The first association relationship in the figure includes device information and configuration information. The device information is device information of the radio frequency unit 0. The device information may include a device type, a device identifier, a feature attribute, and an association configuration. The device type is a type of the radio frequency unit 0, for example, an AAU. The device identifier is the identifier of the radio frequency unit 0. For example, the identifier of the radio frequency unit 0 is ESN0. The feature attribute may include the identifier of the optical module 0 used by the radio frequency unit 0. For example, if the used optical module is the optical module 0, information about the used optical module 0 includes the identifier SN0 of the optical module 0. The association configuration is used to establish a relationship between the device information and the configuration information, namely, the first association relationship. The association configuration includes a configuration name used to identify the configuration information, for example, ID1. In the configuration information, the configuration name is ID1, which may be referred to as a configuration information identifier. The standard information is a standard supported by the radio frequency unit 0, for example, LTE. The sector information is a sector in which the radio frequency unit 0 works, for example, the sector 1. The configuration information may further include address information of the radio frequency unit 0, and the like, which is not shown in the figure. Any configuration information of the radio frequency unit may be included in the configuration information in the first association relationship.

In addition, a representation form of the configuration information is not limited to the manner shown in FIG. 6. In a possible case, the configuration information includes a plurality of pieces, and each piece has a configuration name. For example, as shown in FIG. 6, in the device information of the first association relationship, the association configuration may include ID1 and ID2, configuration information corresponding to ID1 may include indication information, sector information, and the like, and configuration information corresponding to ID2 may include address information, information about a home virtual local area network, and the like.

It should be understood that a sequence of any field in the first association relationship is not limited, and the foregoing is merely an example.

Optionally, the baseband unit may further send the first association relationship to a network management device. The network management device is configured to manage the baseband unit or the radio frequency unit in the access network device.

Step 303: When the radio frequency unit 0 is faulty, the radio frequency unit 0 is replaced with a radio frequency unit 1.

When the radio frequency unit 1 is started, the optical module 0 corresponding to the radio frequency unit 0 is used in the radio frequency unit 1. For example, operation and maintenance personnel replace the faulty radio frequency unit 0 with the radio frequency unit 1. Because the optical module is not faulty, the optical module 0 is still used in the radio frequency unit 1.

Step 304: The radio frequency unit 1 sends an identifier of the radio frequency unit 1 and the identifier of the optical module 0 to the baseband unit.

It may be understood that the identifier of the optical module 0 in this step is the identifier of the optical module 0.

Similarly, for the identifier of the radio frequency unit 1, refer to the description of the identifier of the radio frequency unit 0.

For example, the radio frequency unit 1 sends second information to the baseband unit. The second information includes the identifier of the radio frequency unit 1 and the identifier of the optical module 0.

Similarly, for a manner of sending the second information, and other information that may be included in the second information, refer to the description of the first information in step 301.

Step 305: The baseband unit configures configuration information of the radio frequency unit 1 based on the identifier of the optical module 0.

For example, the baseband unit determines the configuration information of the radio frequency unit 0 from the first association relationship based on the identifier of the optical module 0, and makes the configuration information of the radio frequency unit 1 take effect. Making the configuration information of the radio frequency unit 1 take effect may also be referred to as making the configuration information of the radio frequency unit 1 effective. It may be understood that, because the radio frequency unit 1 is configured to replace the radio frequency unit 0, the configuration information of the radio frequency unit 1 is the same as the configuration information of the radio frequency unit 0.

Further, the baseband unit may establish a second association relationship. The second association relationship is an association relationship between the configuration information of the radio frequency unit 1 and information such as the identifier of the radio frequency unit 1, the identifier of the optical module 0, and the device type information of the radio frequency unit 0. Using the foregoing example as an example, after the radio frequency unit is replaced, the first association relationship is changed to the second association relationship. As shown in FIG. 7, it can be learned that, in the second association relationship, only the device identifier in the first association relationship may be changed to the identifier of the radio frequency module 1.

Optionally, the baseband unit may further send the second association relationship to the network management device. In this case, the network management device may update the first association relationship to the second association relationship. It may be understood that the second association relationship takes effect.

According to the foregoing method, the baseband unit may pre-establish a correspondence between the optical module used by the radio frequency unit 0 and the configuration information of the radio frequency unit 0. After the radio frequency unit 0 in the access network device is replaced with the radio frequency unit 1, because the radio frequency unit 1 uses the optical module of the radio frequency unit 0, the baseband unit may actively index, based on information of the optical module, the configuration information of the radio frequency unit 0 before replacement with the radio frequency unit 1, so that the configuration information that should be configured for the radio frequency unit 1 can be automatically and quickly obtained. This improves efficiency of making the radio frequency module after replacement take effect, and resolves a problem of low efficiency caused by manual configuration.

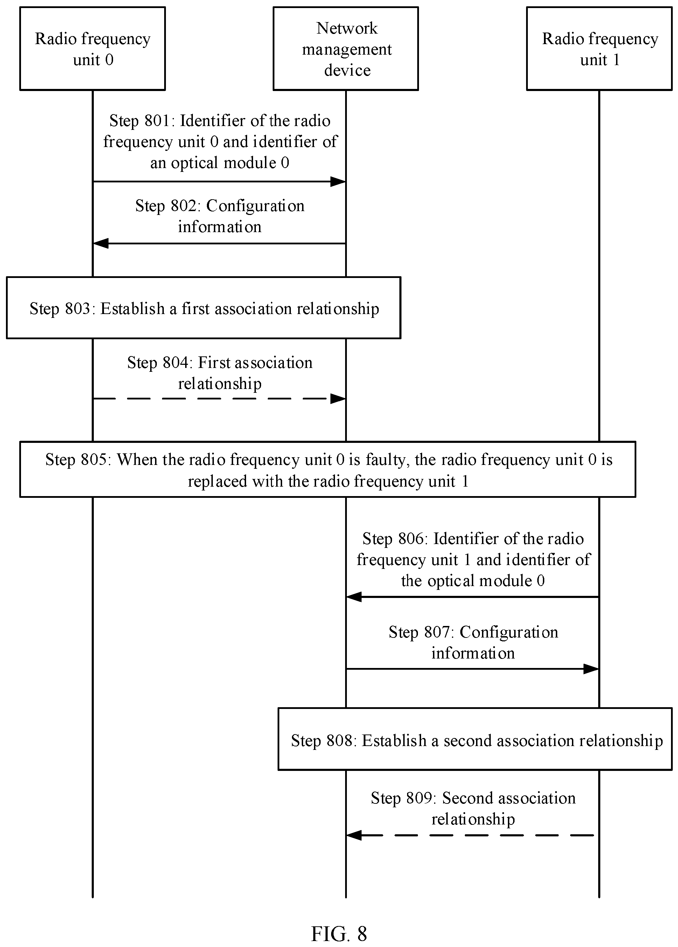

In addition, the foregoing steps are described by using an example in which the radio frequency unit is a radio frequency unit for which operation and maintenance are not independently performed. That is, effectiveness of the configuration information of the radio frequency unit depends on information exchange between the baseband unit and the network management device. When the radio frequency unit is a radio frequency unit for which operation and maintenance are independently performed, the radio frequency unit may directly interact with the network management device. As shown in FIG. 8, this application provides another communication method. The method may include the following steps.

Step 801: A radio frequency unit 0 sends an identifier of the radio frequency unit 0 and an identifier of an optical module 0 to a network management device.

Correspondingly, the network management device receives the identifier of the radio frequency unit 0 and the identifier of the optical module 0 from the radio frequency unit 0.

For this step, refer to the description of step 301 in FIG. 3. Details are not described again.

Step 802: The radio frequency unit 0 receives configuration information from the network management device.

Correspondingly, the network management device sends the configuration information to the radio frequency unit 0.

For the configuration information, refer to the description of the configuration information in Embodiment 3. Details are not described again.

For example, after receiving the identifier of the radio frequency unit 0 and the identifier of the optical module 0, the network management device determines the configuration information for the radio frequency unit 0, and sends the configuration information to the radio frequency unit 0. In this way, the configuration information takes effect on the radio frequency unit 0. That is, the network management device configures the configuration information for the radio frequency unit 0.

Step 803: The radio frequency unit 0 or the network management device establishes a first association relationship.

For the first association relationship, refer to the description of the first association relationship in Embodiment 3. Details are not described again.

If the radio frequency unit 0 establishes the first association relationship in this step, for example, the radio frequency unit 0 may determine the first association relationship based on the configuration information. Specifically, the radio frequency unit 0 uses at least one optical module. Taking the optical module 0 as an example, the radio frequency unit may establish an association relationship among information about the optical module 0, information about the radio frequency unit 0, and the configuration information, namely, the first association relationship. In addition, in this case, step 804 may further continue to be performed.

If the network management device establishes the first association relationship in this step, an execution sequence of this step and an execution sequence of step 802 are not limited in this application. In addition, in this case, step 804 may not need to be performed. After establishing the first association relationship, the network management device may store the first association relationship in a storage unit of the network management device.

Step 804: The radio frequency unit 0 sends the first association relationship to the network management device.

Correspondingly, the network management device receives the first association relationship from the radio frequency unit 0.

This step is optional.

After the first association relationship is established, the radio frequency unit 0 sends the first association relationship to the network management device, so that the network management device may store the first association relationship.

Step 805: When the radio frequency unit 0 is faulty, the radio frequency unit 0 is replaced with a radio frequency unit 1.

It may be understood that, in this step, another factor may alternatively cause the radio frequency unit 0 to be replaced with the radio frequency unit 1, which is not limited to a case in which the radio frequency unit 0 is faulty. In conclusion, the radio frequency unit 1 is a latest radio frequency unit in use.

Step 806: The radio frequency unit 1 sends an identifier of the radio frequency unit 1 and the identifier of the optical module 0 to the network management device.

Similarly, for this step, refer to the description of step 801. Details are not described again.

Step 807: The network management device sends the configuration information to the radio frequency unit 1.

For the configuration information, refer to the description of the configuration information in FIG. 3. The configuration information is the configuration information mentioned in step 802.

In a possible implementation, after receiving the identifier of the radio frequency unit 1 and the identifier of the optical module 0, the network management device determines the first association relationship based on the identifier of the optical module 0, sends the configuration information in the first association relationship to the radio frequency unit 1, and makes the configuration unit take effect on the radio frequency unit 1, that is, configures the configuration information for the radio frequency unit 1. In this way, after the new radio frequency unit is installed and deployed on a base station, effects of automatic activation and automatic configuration information configuring are achieved.

Alternatively, in a possible implementation, in this step, the network management device sends the first association relationship to the radio frequency unit 1, and the first association relationship includes the configuration information. The radio frequency unit 1 learns the identifier of the radio frequency unit 1 and the identifier of the optical module 0 used by the radio frequency unit 1. Therefore, the radio frequency unit 1 may determine the configuration information based on the identifier of the optical module 0 and the first association relationship, and complete configuring of the configuration information.

Step 808: The radio frequency unit 1 or the network management device establishes a second association relationship.

Similar to step 805, for example, when the second association relationship is established by the radio frequency unit 1, the radio frequency unit 1 generates the second association relationship based on the first association relationship. Specifically, in step 807, the network management device sends the first association relationship to the radio frequency unit 1, where the first association relationship includes the configuration information, so that the radio frequency unit 1 replaces the information about the radio frequency unit 0 in the first association relationship with information about the radio frequency unit 1 based on the identifier of the optical module 0, for example, replaces the identifier of the radio frequency unit 0 in the first association relationship with the identifier of the radio frequency unit 1, to generate the second association relationship. Step 809 may be performed subsequently.

When the network management device performs this step, an execution sequence of this step and an execution sequence of step 807 are not limited in this application. Step 809 may not be performed subsequently.

Step 809: The radio frequency unit 1 sends the second association relationship to the network management device.

Correspondingly, the network management device receives the second association relationship from the radio frequency unit 1. The network management device may store the second association relationship.

This step is optional.

According to the method in this embodiment, the radio frequency unit may interact with the network management device, and automatically make the configuration information in the association relationship take effect when going online. This implements automatic information configuring, and reduces a probability of low efficiency caused by manual configuration by the network management device.

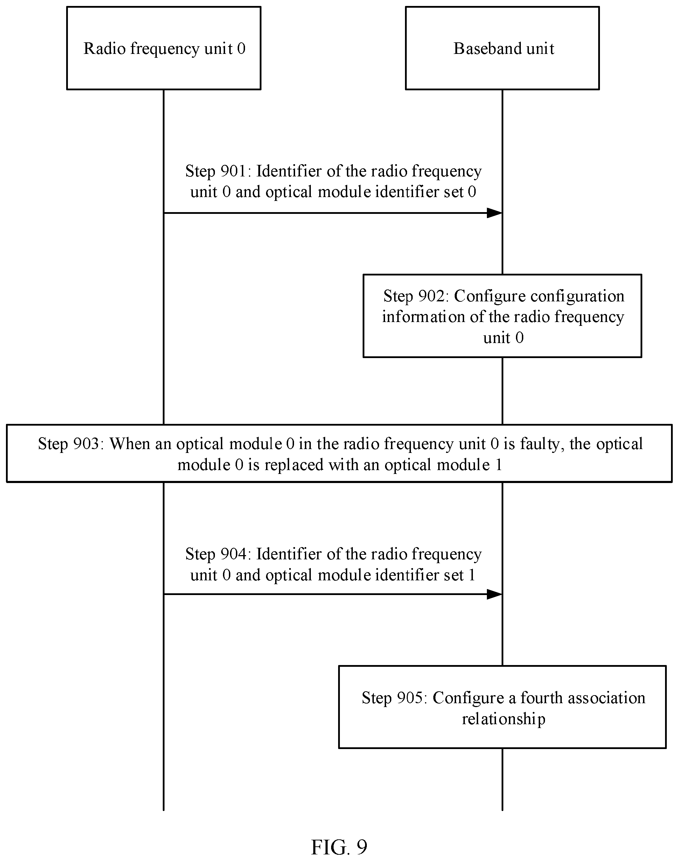

The methods described in the foregoing two embodiments are respectively described when operation and maintenance are not independently performed for the radio frequency unit and when operation and maintenance are independently performed for the radio frequency unit. Similarly, when operation and maintenance are not independently performed and are independently performed for the radio frequency unit, the foregoing idea may also be applicable to a scenario in which the radio frequency unit replaces one or more optical modules used by the radio frequency unit. This application is described by using an example in which operation and maintenance are not independently performed for the radio frequency unit. As shown in FIG. 9, the method may include the following steps.

Step 901: A radio frequency unit 0 sends an identifier of the radio frequency unit 0 and an optical module identifier set 0 to a baseband unit.

The optical module identifier set 0 includes an identifier of an optical module 0 and an identifier of an optical module 2, and the set may further include an identifier of another optical module. This is not limited in this application.

Step 902: The baseband unit configures configuration information of the radio frequency unit 0.

For step 901 and step 902, refer to the descriptions of step 301 and step 302 in FIG. 3.

In addition, the baseband unit may establish a third association relationship. For the first association relationship, also refer to the description of the first association relationship in FIG. 3. The third association relationship is an association relationship among the identifier of the radio frequency unit 0, the optical module identifier set 0, and the configuration information. The third association relationship may be sent from the baseband unit to a network management unit, and the network management unit may store the third association relationship.

Step 903: When the optical module 0 in the radio frequency unit 0 is faulty, the optical module 0 is replaced with an optical module 1.

It should be understood that the optical module 1 is not an optical module in the optical module set 0 in step 901.

Step 904: The radio frequency unit 0 sends the identifier of the radio frequency unit 0 and the identifier of the optical module 2 to the baseband unit.

For example, the radio frequency unit 0 sends the identifier of the radio frequency unit 0 and an optical module identifier set 1 to the baseband unit, and the optical module identifier set 1 includes the identifier of the optical module 2 and an identifier of the optical module 1.

It should be understood that, in a possible case, the optical module identifier set 1 in this step may be a set obtained by replacing the identifier of the optical module 0 in the optical module identifier set 0 with the identifier of the optical module 1.

For a specific implementation of this step, refer to the description of step 901.

Step 905: The baseband unit configures a fourth association relationship.

The baseband unit updates the third association relationship to the fourth association relationship. The fourth association relationship may be understood as an association relationship obtained by replacing the identifier of the optical module 0 in the third association relationship with the identifier of the optical module 1.

The fourth association relationship may be sent from the baseband unit to the network management unit, and the network management unit may store the fourth association relationship.

It may be understood that, in this embodiment, the radio frequency unit 0 is not replaced, and only some optical modules used by the radio frequency unit 0 are updated. Therefore, the configuration information of the radio frequency unit 0 does not need to be changed, and the configuration information does not need to be reconfigured. A prerequisite of the method described in this embodiment is that at least one of a plurality of optical modules in the radio frequency unit 0 needs to work normally and is not replaced. Therefore, the baseband unit may update an association relationship between configuration information and device information based on an identifier of the optical module that works normally, to automatically update the association relationship, thereby reducing a probability of low efficiency caused by manual configuration.

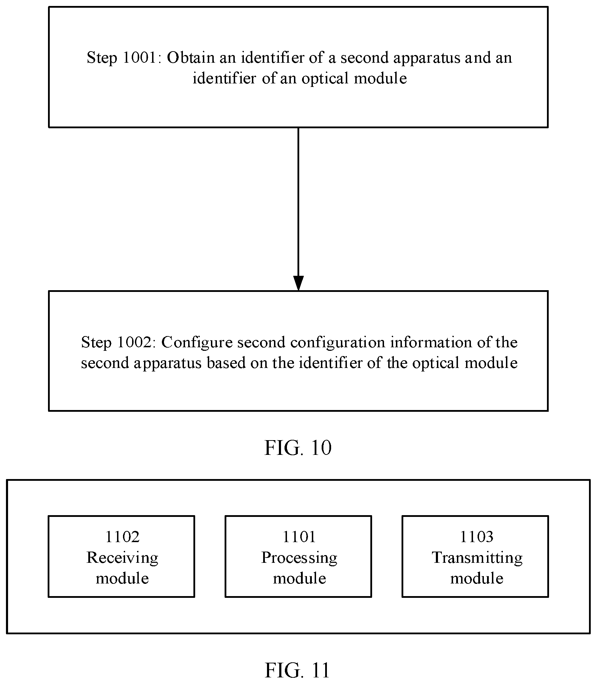

With reference to the methods shown in FIG. 3 to FIG. 9, this application provides a communication method. The method may be performed by a distributed unit or a second apparatus, as shown in FIG. 10. The method may include the following steps.

Step 1001: Obtain an identifier of the second apparatus and an identifier of an optical module.

For the second apparatus, refer to the description of the radio frequency unit 1 in FIG. 3 to FIG. 9. For the identifier of the optical module, refer to the description of the identifier of the optical module 0 in FIG. 3 to FIG. 9. Details are not described again.

For this step, refer to the descriptions of step 304 in FIG. 3 and step 806 in FIG. 8.

For example, the second apparatus uses the optical module.

In a possible implementation, obtaining the identifier of the second apparatus and the identifier of the optical module includes: receiving the identifier of the second apparatus and the identifier of the optical module.

In a possible case, receiving the identifier of the second apparatus and the identifier of the optical module includes:
receiving second information, where the second information includes the identifier of the second apparatus and the identifier of the optical module.

For example, the second information further includes a type of the second apparatus, and the type of the second apparatus is any type of radio frequency module, remote radio unit, radio unit, remote radio head, radio frequency processing unit, or active antenna processing unit.

For example, the second information is in an ethernet frame or a high-level data link control frame.

For example, receiving the second information includes: receiving the second information through a fronthaul interface, a common public radio interface, or an enhanced common public radio interface.

For this implementation and a possible case thereof, refer to the description of step 304 in FIG. 3.

Step 1002: Configure second configuration information of the second apparatus based on the identifier of the optical module.

For this step, refer to the description of step 305 in FIG. 3 or step 807 in FIG. 8.

For example, the second configuration information is the same as first configuration information of a first apparatus, and both the first apparatus and the second apparatus use the optical module. For both the first configuration information and the second configuration information, refer to the description of the configuration information in FIG. 3 or FIG. 8. For the first apparatus, refer to the description of the radio frequency unit 0 in FIG. 3 or FIG. 8.

For example, the first configuration information or the second configuration information includes at least one of the following: standard information, sector information, address information, and information about a virtual local area network.

In a possible case, when the first apparatus is faulty, the second apparatus is configured to replace the first apparatus.

In a possible implementation, configuring the second configuration information of the second apparatus based on the identifier of the optical module may include: determining a first association relationship based on the identifier of the optical module, where the first association relationship is a correspondence among an identifier of the first apparatus, the identifier of the optical module, and the first configuration information; using the first configuration information as the second configuration information; and configuring the second configuration information.

In a possible implementation of this implementation, the method further includes: receiving the first association relationship from a network management device.

Specifically, before receiving the first association relationship from the network management device, the method further includes: receiving the identifier of the first apparatus and the identifier of the optical module; and establishing the first association relationship.

In a possible implementation, receiving the identifier of the first apparatus and the identifier of the optical module includes: receiving first information, where the first information includes the identifier of the first apparatus and the identifier of the optical module.

In a possible case, receiving the first information includes: receiving the first information through a fronthaul interface, a common public radio interface, or an enhanced common public radio interface.

For example, the first information further includes a type of the first apparatus, and the type of the first apparatus is any type of radio frequency module, remote radio unit, radio unit, remote radio head, radio frequency processing unit, or active antenna processing unit.

For example, the first information is in an ethernet frame or a high-level data link control frame.

For this implementation and a possible case thereof, refer to the description of step 301 in FIG. 3 or step 801 in FIG. 8.

In addition, the method may further include: sending the first association relationship to the network management device. It should be understood that the network management device may store the first association relationship for subsequent use, that is, the first association relationship is received from the network management device for determining the second configuration information. For this step, refer to the related description of step 302 in FIG. 3 or step 804 in FIG. 8.

In a possible implementation, the method may further include: establishing a second association relationship, where the second association relationship is a correspondence among the identifier of the second apparatus, the identifier of the optical module, and the second configuration information.

In a possible implementation of this implementation, the method may further include: sending the second association relationship to the network management device.

For this implementation and a possible implementation thereof, refer to the related description in FIG. 305 or 808 in FIG. 8.

In addition, in a possible implementation, the method described in this embodiment may further include:
obtaining the identifier of the second apparatus and a first optical module identifier set, where the first optical module identifier set includes the identifier of the optical module and an identifier of a first optical module; and configuring a third association relationship, where the third association relationship is a relationship among the identifier of the second apparatus, the second configuration information, and the first optical module identifier set. For the method, refer to the descriptions of step 901 and step 902 in FIG. 9. For the first optical module identifier set, refer to the description of the optical module identifier set 0 in FIG. 9.

In a possible case, the method further includes: obtaining the identifier of the second apparatus and a second optical module identifier set, where the second optical module identifier set includes the identifier of the optical module and an identifier of a second optical module; and configuring a fourth association relationship, where the fourth association relationship is a relationship among the identifier of the second apparatus, the second configuration information, and the second optical module identifier set. For the second optical module identifier set, refer to the description of the optical module identifier set 1 in FIG. 9.

Configuring the fourth association relationship includes: determining the third association relationship based on the identifier of the second apparatus and the identifier of the optical module in the second optical module identifier set; and replacing the first optical module identifier set in the third association relationship with the second optical module identifier set, to obtain and configure the fourth association relationship.

For this possible case, refer to the descriptions of step 904 and step 905 in FIG. 9.

For beneficial effects of the embodiment shown in FIG. 10, refer to the descriptions of beneficial effects of the methods shown in FIG. 3, FIG. 8, and FIG. 9. Details are not described again.

It may be understood that, to implement functions in the foregoing methods, the first apparatus, the second apparatus, the network management device, the distributed unit, the baseband unit, the radio frequency unit 0, the radio frequency unit 1, or the like includes a corresponding hardware structure and/or software module for performing each function. A person skilled in the art should be easily aware that, with reference to units and method steps in the examples described in this disclosure, this disclosure can be implemented by hardware or a combination of hardware and computer software. Whether a function is performed by hardware or hardware driven by computer software depends on particular application scenarios and design constraints of the technical solutions.

The foregoing mainly describes the solutions provided in embodiments of this application from a perspective of interaction between the units. Correspondingly, an embodiment of this application further provides a communication apparatus. The communication apparatus may be the baseband unit in the foregoing method embodiments, or an apparatus including a function of the baseband unit, or a component that can be used for the baseband unit. Alternatively, the communication apparatus may be the radio frequency unit 0, the radio frequency unit 1, the first apparatus, or the second apparatus in the foregoing method embodiments, or an apparatus including a function of the radio frequency unit 0, the radio frequency unit 1, the first apparatus, or the second apparatus, or a component that can be used for the radio frequency unit 0, the radio frequency unit 1, the first apparatus, or the second apparatus. Alternatively, the communication apparatus may be the network management device in the foregoing method embodiments, or an apparatus including a function of the network management device, or a component that can be used for the network management device. It may be understood that, to implement the foregoing functions, the communication apparatus includes a hardware structure and/or a software module for performing a corresponding function. A person skilled in the art should be easily aware that, with reference to units and algorithm steps in the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

FIG. 11 is a diagram of a communication apparatus according to an embodiment of this application.

The communication apparatus includes a processing module 1101, a receiving module 1102, and a transmitting module 1103. The processing module 1101 is configured to implement data processing performed by the communication apparatus. The receiving module 1102 is configured to receive content between the communication apparatus and another unit or network element, and the transmitting module 1103 is configured to send the content between the communication apparatus and the another unit or network element. It should be understood that the processing module 1101 in this embodiment of this application may be implemented by a processor or a processor-related circuit component (or referred to as a processing circuit), and the receiving module 1102 may be implemented by a receiver or a receiver-related circuit component. The transmitting module 1103 may be implemented by a transmitter or a transmitter-related circuit component.

For example, the communication apparatus may be a communication apparatus device, or may be a chip used in a communication apparatus device or another combined device or component with a function of the communication apparatus device.

For example, the communication apparatus may be the baseband unit or the distributed unit in FIG. 3 to FIG. 10, or may be the radio frequency unit 0, the radio frequency unit 1, the first apparatus, or the second apparatus in FIG. 3 to FIG. 10, or may be the network management device in FIG. 3 to FIG. 10.

When the communication apparatus is the baseband unit or the distributed unit, the receiving module 1102 is configured to obtain an identifier of a second apparatus and an identifier of an optical module (for example, refer to step 304 in FIG. 3 or step 1001 in FIG. 10), where the second apparatus uses the optical module; and the processing module 1101 is used to configure second configuration information of the second apparatus based on the identifier of the optical module (for example, refer to step 305 in FIG. 3 or step 1002 in FIG. 10), where the second configuration information is the same as first configuration information of a first apparatus, and both the first apparatus and the second apparatus use the optical module.

In addition, the foregoing modules may be further configured to support another process of the technology described in this specification. For beneficial effects, refer to the foregoing descriptions. Details are not described herein again.

When the communication apparatus is the network management device, the radio frequency unit 1, or the second apparatus, the receiving module 1102 is configured to obtain an identifier of the second apparatus and an identifier of an optical module (for example, refer to step 806 in FIG. 8 or step 1001 in FIG. 10), where the second apparatus uses the optical module; and the processing module 1101 is used to configure second configuration information of the second apparatus based on the identifier of the optical module (for example, refer to step 305 in FIG. 3 or step 1002 in FIG. 10), where the second configuration information is the same as first configuration information of a first apparatus, and both the first apparatus and the second apparatus use the optical module.

In addition, the foregoing modules may be further configured to support another process of the technology described in this specification. For beneficial effects, refer to the foregoing descriptions. Details are not described herein again.

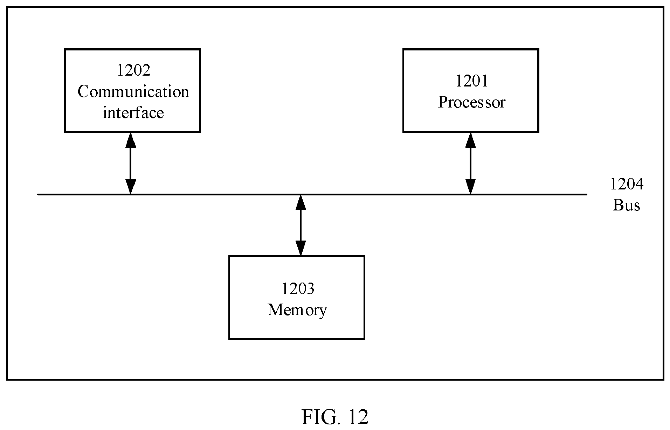

FIG. 12 is a diagram of another communication apparatus according to an embodiment of this application. The communication apparatus includes a processor 1201, a communication interface 1202, and a memory 1203. The processor 1201, the communication interface 1202, and the memory 1203 may be connected to each other through a bus 1204. The bus 1204 may be a peripheral component interconnect (peripheral component interconnect, PCI) bus, an extended industry standard architecture (extended industry standard architecture, EISA) bus, or the like. The bus 1204 may be classified into an address bus, a data bus, a control bus, and the like. For ease of representation, the bus is represented by using only one line in FIG. 12. However, this does not mean that there is only one bus or only one type of bus. The processor 1201 may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (Generic Array Logic, GAL), or any combination thereof. The memory 1203 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache.

For example, the communication apparatus may be the baseband unit or the distributed unit in FIG. 3 to FIG. 10, or may be the radio frequency unit 0, the radio frequency unit 1, the first apparatus, or the second apparatus in FIG. 3 to FIG. 10, or may be the network management device in FIG. 3 to FIG. 10.

The processor 1201 is configured to implement a data processing operation of the communication apparatus. The communication interface 1202 is configured to implement a receiving operation and a sending operation of the communication apparatus.

When the communication apparatus is the baseband unit or the distributed unit, the communication interface 1202 is configured to obtain an identifier of a second apparatus and an identifier of an optical module (for example, refer to step 304 in FIG. 3 or step 1001 in FIG. 10), where the second apparatus uses the optical module; and the processor 1201 is used to configure second configuration information of the second apparatus based on the identifier of the optical module (for example, refer to step 305 in FIG. 3 or step 1002 in FIG. 10), where the second configuration information is the same as first configuration information of a first apparatus, and both the first apparatus and the second apparatus use the optical module.

In addition, the foregoing modules may be further configured to support another process of the technology described in this specification. For beneficial effects, refer to the foregoing descriptions. Details are not described herein again.

When the communication apparatus is the network management device, the radio frequency unit 1, or the second apparatus, the communication interface 1202 is configured to obtain an identifier of the second apparatus and an identifier of an optical module (for example, refer to step 806 in FIG. 8 or step 1001 in FIG. 10), where the second apparatus uses the optical module; and the processor 1201 is used to configure second configuration information of the second apparatus based on the identifier of the optical module (for example, refer to step 305 in FIG. 3 or step 1002 in FIG. 10), where the second configuration information is the same as first configuration information of a first apparatus, and both the first apparatus and the second apparatus use the optical module.

In addition, the foregoing modules may be further configured to support another process of the technology described in this specification. For beneficial effects, refer to the foregoing descriptions. Details are not described herein again.

An embodiment of this application provides a communication system, including the baseband unit and the radio frequency unit (or the radio frequency unit 1 or the second apparatus). The baseband unit performs the method performed by the baseband unit in any embodiment shown in FIG. 3 or FIG. 10, and the radio frequency unit performs the method performed by the second apparatus or the radio frequency unit 1 in any embodiment shown in FIG. 3 or FIG. 10.

The communication system may further include the network management device, and the network management device may perform the method performed by the network management device in any embodiment shown in FIG. 3 or FIG. 10.

An embodiment of this application provides a communication system, including the network management device and the radio frequency unit (or the radio frequency unit 1 or the second apparatus). The network management device may perform the method performed by the network management device in any embodiment shown in FIG. 8 or FIG. 10, and the radio frequency unit may perform the method performed by the second apparatus or the radio frequency unit 1 in any embodiment shown in FIG. 8 or FIG. 10.

The communication system may further include a baseband unit.

An embodiment of this application further provides a computer-readable storage medium. The computer-readable storage medium stores a computer program. When the computer program is executed by a computer, the computer may implement a procedure related to the baseband unit or the distributed unit in any one of the embodiments shown in FIG. 3 and FIG. 8 to FIG. 10 provided in the foregoing method embodiments, or the computer may implement a procedure related to the radio frequency unit 0, the radio frequency unit 1, the first apparatus, or the second apparatus in any one of the embodiments shown in FIG. 3, FIG. 8, FIG. 9, or FIG. 10 provided in the foregoing method embodiments, or the computer may implement a procedure related to the network management device in the embodiments shown in FIG. 3 and FIG. 8 to FIG. 10 provided in the foregoing method embodiments.

An embodiment of this application further provides a computer program product. The computer program product is configured to store a computer program. When the computer program is executed by a computer, the computer may implement a procedure related to the baseband unit or the distributed unit in any one of the embodiments shown in FIG. 3 and FIG. 8 to FIG. 10 provided in the foregoing method embodiments, or the computer may implement a procedure related to the radio frequency unit 0, the radio frequency unit 1, the first apparatus, or the second apparatus in any one of the embodiments shown in FIG. 3, FIG. 8, FIG. 9, or FIG. 10 provided in the foregoing method embodiments, or the computer may implement a procedure related to the network management device in the embodiments shown in FIG. 3 and FIG. 8 to FIG. 10 provided in the foregoing method embodiments.

This application further provides a chip, including a processor. The processor is configured to read and run a computer program stored in a memory, to perform corresponding operations and/or procedures in the baseband unit, the first apparatus, the second apparatus, the radio frequency unit 0, the radio frequency unit 1, or the network management device in the method provided in this application. Optionally, the chip further includes a memory, the memory and the processor are connected to the memory through a circuit or a wire, and the processor is configured to read and execute a computer program in the memory. Optionally, the chip further includes a communication interface, and the processor is connected to the communication interface. The communication interface is configured to receive data and/or information to be processed, and the processor obtains the data and/or the information from the communication interface and processes the data and/or the information. The communication interface may be an input/output interface, an interface circuit, an output circuit, an input circuit, a pin, a related circuit, or the like on the chip. The processor may alternatively be embodied as a processing circuit or a logic circuit.

The chip may alternatively be replaced by a chip system, and details are not described herein.

The terms "include", "have" and any other variants thereof in this application are intended to cover non-exclusive inclusion. For example, a process, method, system, product, or device that includes a series of steps or units is not necessarily limited to those steps or units that are expressly listed, but may include other steps or units that are not expressly listed or are inherent to such a process, method, product, or device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual conditions to achieve the objectives of the solutions in embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions to enable a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In addition, the terms "first", "second", and the like in the specification, claims, and the accompanying drawings of this application are intended to distinguish between different objects, but are not intended to describe a particular order. In addition, the terms "including" and "having" and any other variants thereof are intended to cover non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

Although this application is described with reference to specific features and embodiments thereof, it is clear that various modifications and combinations may be made to them without departing from the spirit and scope of this application. Correspondingly, the specification and the accompanying drawings are merely example descriptions of this application defined by the accompanying claims, and are considered as any of or all modifications, variations, combinations, or equivalents that cover the scope of this application. It is clear that a person skilled in the art can make various modifications and variations to this application without departing from the spirit and scope of this application. This application is intended to cover these modifications and variations of this application provided that they fall within the scope of protection defined by the claims of this application and their equivalent technologies.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A communication method, wherein the method comprises:
obtaining an identifier of a second apparatus and an identifier of an optical module, wherein the second apparatus uses the optical module; and
configuring second configuration information of the second apparatus based on the identifier of the optical module, wherein the second configuration information is the same as first configuration information of a first apparatus, and both the first apparatus and the second apparatus use the optical module.

2. The method according to claim 1, wherein the method further comprises:
establishing a second association relationship, wherein the second association relationship is a correspondence among the identifier of the second apparatus, the identifier of the optical module, and the second configuration information.

3. The method according to claim 2, wherein the method further comprises:
sending the second association relationship to a network management device.

4. The method according to any one of claims 1 to 3, wherein configuring the second configuration information of the second apparatus based on the identifier of the optical module comprises:
determining a first association relationship based on the identifier of the optical module, wherein the first association relationship is a correspondence among an identifier of the first apparatus, the identifier of the optical module, and the first configuration information;
obtaining the first configuration information; and
configuring the first configuration information as the second configuration information.

5. The method according to claim 4, wherein the method further comprises:
receiving the first association relationship from the network management device.

6. The method according to any one of claims 1 to 5, wherein obtaining the identifier of the second apparatus and the identifier of the optical module comprises:
receiving the identifier of the second apparatus and the identifier of the optical module.

7. The method according to claim 6, wherein receiving the identifier of the second apparatus and the identifier of the optical module comprises:
receiving second information, wherein the second information comprises the identifier of the second apparatus and the identifier of the optical module.

8. The method according to claim 7, wherein the second information further comprises a type of the second apparatus, and the type of the second apparatus is radio frequency module, remote radio unit, radio unit, remote radio head, radio frequency processing unit, or active antenna processing unit.

9. The method according to claim 7 or 8, wherein the second information is in an ethernet frame or a high-level data link control frame.

10. The method according to any one of claims 7 to 9, wherein receiving the second information comprises:
receiving the second information through a fronthaul interface, a common public radio interface, or an enhanced common public radio interface.

11. The method according to any one of claims 1 to 10, wherein the method further comprises:
receiving the identifier of the first apparatus and the identifier of the optical module; and
establishing the first association relationship, wherein the first association relationship is the correspondence among the identifier of the first apparatus, the identifier of the optical module, and the first configuration information.

12. The method according to claim 11, wherein receiving the identifier of the first apparatus and the identifier of the optical module comprises:
receiving first information, wherein the first information comprises the identifier of the first apparatus and the identifier of the optical module.

13. The method according to claim 12, wherein the first information further comprises a type of the first apparatus, and the type of the first apparatus is radio frequency module, remote radio unit, radio unit, remote radio head, radio frequency processing unit, or active antenna processing unit.

14. The method according to claim 12 or 13, wherein the first information is in an ethernet frame or a high-level data link control frame.

15. The method according to any one of claims 12 to 14, wherein receiving the first information comprises:
receiving the first information through a fronthaul interface, a common public radio interface, or an enhanced common public radio interface.

16. The method according to any one of claims 11 to 15, wherein the method further comprises:
sending the first association relationship to the network management device.

17. The method according to any one of claims 1 to 16, wherein
the first configuration information or the second configuration information comprises at least one of the following:
standard information, sector information, address information, and information about a virtual local area network.

18. The method according to any one of claims 1 to 17, wherein when the first apparatus is faulty, the second apparatus is configured to replace the first apparatus.

19. The method according to any one of claims 1 to 18, wherein the method further comprises:
obtaining the identifier of the second apparatus and a first optical module identifier set, wherein the first optical module identifier set comprises the identifier of the optical module and an identifier of a first optical module; and
configuring a third association relationship, wherein the third association relationship is a relationship among the identifier of the second apparatus, the second configuration information, and the first optical module identifier set.

20. The method according to claim 19, wherein the method further comprises:
obtaining the identifier of the second apparatus and a second optical module identifier set, wherein the second optical module identifier set comprises the identifier of the optical module and an identifier of a second optical module; and
configuring a fourth association relationship, wherein the fourth association relationship is a relationship among the identifier of the second apparatus, the second configuration information, and the second optical module identifier set.

21. The method according to claim 20, wherein configuring the fourth association relationship comprises:
determining the third association relationship based on the identifier of the second apparatus and the identifier of the optical module in the second optical module identifier set; and
replacing the first optical module identifier set in the third association relationship with the second optical module identifier set, to obtain and configure the fourth association relationship.

22. A communication apparatus, comprising a unit configured to perform the method according to any one of claims 1 to 21.

23. A communication apparatus, comprising a processor, wherein
the processor is configured to: read a program from a memory and run the program, to implement the method according to any one of claims 1 to 21.

24. A computer program product comprising instructions, wherein when the computer program product runs on a computer, the computer is enabled to perform the method according to any one of claims 1 to 21.

25. A computer-readable storage medium, wherein the computer-readable storage medium stores instructions;
and when the instructions are run on a computer, a processor is enabled to perform the method according to any one of claims 1 to 21.

26. A system, wherein the system comprises a distributed unit and a radio frequency unit, and the distributed unit is configured to perform the method according to any one of claims 1 to 21.

27. The system according to claim 26, wherein the system further comprises a network management device, and the network management device is configured to manage the distributed unit or the second apparatus.

28. The system according to claim 26 or 27, wherein the radio frequency unit comprises any one of the following: radio frequency module, remote radio unit, radio unit, remote radio head, radio frequency processing unit, or active antenna processing unit.
